# EUROPÄISCHE PATENTANMELDUNG

(11) **EP 2 378 150 A2**
(43) Veröffentlichungstag der Anmeldung: **19.10.2011**
(21) Anmeldenummer: 11002968.3
(22) Anmeldetag: 08.04.2011
(51) Int. Cl.: F16D 3/205

(54) **Tripodegelenk**

(30) Priorität: 16.04.2010 DE 102010015133
(71) Anmelder: Volkswagen Aktiengesellschaft, 38436 Wolfsburg (DE)
(72) Erfinder: Zornhagen, Marco, 38302 Wolfenbüttel (DE)

(57) **Zusammenfassung**

Ein Tripodegelenk umfasst einen Tripodestern (10) mit radial abstehenden Zapfen (12), ein Gelenkaußenteil mit einer Drehachse, das parallel zu der Drehachse verlaufende Laufbahnpaare mit einander in Umfangsrichtung gegenüberliegenden Laufbahnen aufweist, und jeweils ein Rollelement (30), das an den Laufbahnen eines Laufbahnpaares geführt ist. Jedes Rollelement (30) umfasst ein Gehäuse mit einem ersten Gehäuseteil (31) und einem zweiten Gehäuseteil (32), welche gemeinsam eine Aufnahmeöffnung (34) zur Lagerung eines Zapfens (12) des Tripodesterns (10) ausbilden, sowie Linearführungseinrichtungen, welche das erste Gehäuseteil (31) an einer ersten Laufbahn eines Laufbahnpaares und das zweite Gehäuseteil (32) an einer zweiten Laufbahn des Laufbahnpaares abstützen und in Längsrichtung führen. Das erste Gehäuseteil (31) und das zweite Gehäuseteil (32) sind gegenüber einer Ebene (E), welche durch Mittellinien der ersten und zweiten Laufbahn eines Laufbahnpaars aufgespannt wird, gegensinnig verschwenkbar. Hierdurch wird eine Verbesserung des Gelenkwirkungsgrads erzielt.

## Beschreibung

Die Erfindung bezieht sich auf ein Tripodegelenk, umfassend einen Tripodestern mit radial abstehenden Zapfen, ein Gelenkaußenteil mit einer Drehachse, das parallel zu der Drehachse verlaufende Laufbahnpaare mit einander in Umfangsrichtung gegenüberliegenden Laufbahnen aufweist, und jeweils ein Rollelement, das an den Laufbahnen eines Laufbahnpaares geführt ist, wobei das Rollelement umfasst: ein Gehäuse mit einem ersten Gehäuseteil und einem zweiten Gehäuseteil, welche gemeinsam eine Aufnahmeöffnung zur Lagerung eines Zapfens des Tripodesterns ausbilden, sowie Linearführungseinrichtungen, welche das erste Gehäuseteil an einer ersten Laufbahnen eines Laufbahnpaares und das zweite Gehäuseteil an einer zweiten Laufbahn des Laufbahnpaares abstützen und in Längsrichtung führen.

Ein derartiges Gelenk ist aus der DE 10 2007 059 378 A1 bekannt. Im Unterschied zu herkömmlichen Tripodegelenken sind bei gattungsgemäßen Tripodegelenken die Rollelemente nicht als Rollen ausgeführt, die bei einer Drehung des Gelenks unter Beugung desselben an den Laufbahnen des Gelenkaußenteils abrollen. Vielmehr kommen hierbei Rollelemente zum Einsatz, die ein Gehäuse aufweisen, das über Wälzkörper, beispielsweise Kugeln oder Rollen, entlang der Laufbahnen lediglich linear verlagert wird, dabei selbst jedoch nicht abgerollt wird.

Bei einer Drehung des Gelenks unter Beugung der Bauteilachsen zueinander werden die Rollelemente achsparallel zur Drehachse des Gelenkaußenteils in Verschieberichtung hin und her bewegt. Bei dem aus der DE 10 2007 059 378 A1 bekannten Tripodegelenk wird der hierfür benötigte Schwenkfreiheitsgrad zwischen den Zapfen und den Rollelementen bereitgestellt. Hierzu ist jeder Zapfen an seinem Außenumfang zumindest abschnittsweise kugelförmig ausgebildet. Am Rollelement befindet sich eine im Wesentlichen zylindrisch ausgebildete Lagerfläche, so dass bei einer Beugung des Gelenks das Rollelement und die Längsachse des zugehörigen Zapfens zueinander verkippt werden können. Zudem ist eine axiale Verschiebbarkeit in Richtung der Längsachse des Zapfens gegeben.

Um ein Spiel entlang des Verschiebewegs der Rollelemente entlang der Laufbahnen zu kompensieren und bei wechselnder Belastung Geräusche zu vermeiden, ist bei dem aus der DE 10 2007 059 378 A1 bekannten Tripodegelenk zwischen dem ersten Gehäuseteil und dem zweiten Gehäuseteil ein ringförmiger Gehäuseinnenkörper angeordnet, in dessen Aufnahmeöffnung der Zapfens, anliegt. Zwischen dem Gehäuseinnenkörper und den Gehäuseteilen sind ein oder mehrere Federelemente angeordnet, um das erste und zweite Gehäuseteil auseinanderspreizen und so ein etwaiges Spiel des Rollelements zwischen den Laufbahnen zu kompensieren.

Diese Bauweise ist fertigungs- und montagetechnisch aufwändig. Zudem verursacht die axiale Verschiebung des Zapfens in der Aufnahmeöffnung Reibung.

Davon ausgehend liegt der Erfindung die Aufgabe zugrunde, bei einem gattungsgemäßen Tripodegelenk den Wirkungsgrad weiter zu verbessern.

Diese Aufgabe wird durch ein Rollelement gemäß Patentanspruch 1 gelöst. Das erfindungsgemäße Tripodegelenk umfasst einen Tripodestern mit radial abstehenden Zapfen, ein Gelenkaußenteil mit einer Drehachse, das parallel zu der Drehachse verlaufende Laufbahnpaare mit einander in Umfangsrichtung gegenüberliegenden Laufbahnen aufweist, und jeweils ein Rollelement, das an den Laufbahnen eines Laufbahnpaares geführt ist. Das Rollelement umfasst seinerseits ein Gehäuse mit einem ersten Gehäuseteil und einem zweiten Gehäuseteil, welche gemeinsam eine Aufnahmeöffnung zur Lagerung eines Zapfens des Tripodesterns ausbilden, sowie Linearführungseinrichtungen, welche das erste Gehäuseteil an einer ersten Laufbahnen eines Laufbahnpaares und das zweite Gehäuseteil an einer zweiten Laufbahn des Laufbahnpaares abstützen und in Längsrichtung führen. Das erfindungsgemäße Gelenk zeichnet sich dadurch aus, dass das erste Gehäuseteil und das zweite Gehäuseteil gegenüber einer Ebene, welche durch Mittellinien der ersten und zweiten Laufbahn eines Laufbahnpaars aufgespannt wird, gegensinnig verschwenkbar sind.

Diese Schwenkbewegbarkeit hat zur Folge, dass bei einer Drehung des Gelenks unter Beugung desselben die Reibung zwischen der Aufnahmeöffnung der Rollelemente und den Zapfen vermindert oder vollständig vermieden wird, da die Gehäuseteile für einen Ausgleich längs der Längsachse der Zapfen sorgen. Hierdurch werden der Wirkungsgrad und die Lebensdauer des Gelenks verbessert.

Vorteilhafte Ausgestaltungen sind in weiteren Patentansprüchen angegeben.

So können die Linearführungseinrichtungen eine oder mehrere Kugeln umfassen, wobei das erste Gehäuseteil um eine Achse, die durch die Mittelpunkte der dieses an der ersten Laufbahn abstützenden Kugeln definiert wird, verschwenkbar ist und das zweite Gehäuseteil um eine Achse, die durch die Mittelpunkte der dieses an der zweiten Laufbahn abstützenden Kugeln definiert wird, verschwenkbar ist. Hierdurch wird die Schwenkbewegbarkeit der Gehäuseteile in die Linearführung der Rollelemente integriert, wodurch sich eine besonders kompakte Bauweise erzielen lässt.

Ferner können die Zapfen in den Aufnahmeöffnungen mit ihrem Außenumfang jeweils gegen das erste und das zweite Gehäuseteil anliegen. Im Vergleich zu der aus der DE 10 2007 059 378 A1 bekannten Bauweise wird hierbei der Gehäuseinnenkörper eingespart. Dies verringert den Fertigungs- und Montageaufwand und begünstigt kompakte Abmessungen.

Vorzugsweise weisen der Zapfen und gegebenenfalls auch die Aufnahmeöffnungen gewölbte. Mantellinien auf. Dadurch bleibt die Hertzsche Pressung gering. Dies begünstigt eine hohe Lebensdauer.

Zwischen den Gehäuseteilen können Federelemente eingebaut sein, solange deren Schwenkbewegbarkeit nicht beeinträchtigt wird. Die Führung am Gelenkaußenteil kann so im Wesentlichen spielfrei erfolgen. Geräuschbildung bei Wechselbelastung wird unterbunden. Diese Federelemente können auch eine Rückstellung der Gehäuseteile in die gemeinsame Ebene bewirken.

Weiterhin ist es möglich, zwischen mindestens einem Zapfen und der zugehörigen Aufnahmeöffnung ein oder mehrere Federelemente anzuordnen. Hierdurch lässt sich beispielsweise etwaiges Spiel kompensieren. Das Gelenk kann nahezu spielfrei ausgeführt werden. Über die Federelemente zwischen Zapfen und Aufnahmeöffnung kann zudem die Gelenkcharakteristik variiert werden, da sich hierdurch die Kraftübertragung beeinflussen lässt.

Das erfindungsgemäße Gelenk ermöglicht es, das Rollelement zwischen den einander gegenüberliegenden Laufbahnen einer Laufbahnpaarung am Gelenkaußenteil zu verspannen, ohne die positiven Eigenschaften der Tripode insbesondere im Hinblick auf eine leichte Axialverschiebbarkeit negativ zu beeinträchtigen. Die Linearführungseinrichtungen bleiben stets in Laufbahnkontakt.

Nachfolgend wird die Erfindung anhand von in der Zeichnung dargestellten Ausführungsbeispielen näher erläutert. Die Zeichnung zeigt in:
- Figur 1: eine räumliche Ansicht eines Tripodegelenks nach einem ersten Ausführungsbeispiel der Erfindung, wobei das Gelenkaußenteil des Tripodegelenks im Bereich des Rollelements freigeschnitten ist,
- Figur 2: eine räumliche Ansicht des Rollelements und Tripodesterns aus Figur 1 mit leicht verschwenkten Gehäuseteilen,
- Figur 3: eine Schnittansicht des Rollelements und Tripodesterns aus Figur 1,
- Figur 4: eine räumliche Ansicht des Rollelements, und in
- Figur 5: eine Schnittansicht eines Rollelements und Tripodesterns nach einem zweiten Ausführungsbeispiel.

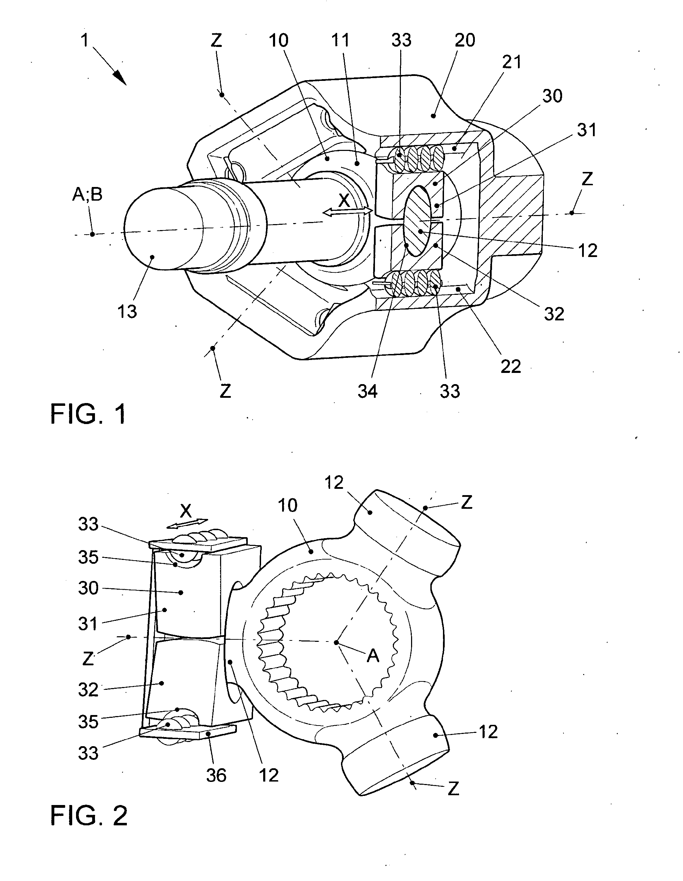

Figuren 1 bis 4 zeigen ein Tripodegelenk 1 nach einem ersten Ausführungsbeispiel der Erfindung, das beispielsweise in einem Antriebsstrang oder in einer Seitenwelle eines Kraftfahrzeugs als Gleichlaufgelenk einsetzbar ist. Das Tripodegelenk 1 umfasst ein Gelenkinnenteil in Form eines Tripodesterns 10 mit einem ringförmigen Grundkörper 11 und drei von diesem radial abstehenden Zapfen 12. Die Zapfen 12 sind in Umfangsrichtung gleichbeabstandet. Ihre Längsachsen Z verlaufen im Wesentlichen radial zur Drehachse A des Tripodesterns 10 und liegen bei dem dargestellten Ausführungsbeispiel in einer gemeinsamen Ebene. An den Tripodestern 10 schließt eine Eingangswelle 13 an.

Das Tripodegelenk 1 umfasst ferner ein Gelenkaußenteil 20, das an seinem Innenumfang parallel zu seiner Drehachse B verlaufende Laufbahnpaarungen mit einander in Umfangsrichtung gegenüberliegenden Laufbahnen 21 und 22 aufweist. Diese Laufbahnen 21 und 22 stehen mit weiter unten näher erläuterten Rollelementen 30 in Eingriff, wobei je nach Drehrichtung und Betriebssituation eine der Laufbahnen 21 bzw. 22 lasttragend und die gegenüberliegende Laufbahn 22 bzw. 21 im Wesentlichen entlastet ist. Die Laufbahnen 21 und 22 am Gelenkaußenteil 20 verlaufen jeweils parallel zur Drehachse B des Gelenkaußenteils 20 und führen die Rollelemente 30 in Längsrichtung, d.h. parallel zur Drehachse B. Bei einer Drehung des Gelenks 1 unter Beugung der Bauteilachsen A und B zueinander werden somit die Rollelemente 30 achsparallel zur Drehachse B des Gelenkaußenteils 20 in Verschieberichtung X hin und her bewegt.

Jedes Rollelement 30 des Tripodegelenks 1 weist ein mehrteiliges Gehäuse mit einem ersten Gehäuseteil 31 und einem zweiten Gehäuseteil 32 auf, welche gemeinsam eine Aufnahmeöffnung 34 zur Lagerung eines Zapfens 12 ausbilden und vorliegend beispielhaft als Halbschalen ausgeführt sind. Bei dem dargestellten Ausführungsbeispiel ist eine Hälfte der Aufnahmeöffnung 34 an dem ersten Gehäuseteil 31 und eine weitere Hälfte der Aufnahmeöffnung 34 an dem zweiten Gehäuseteil 32 vorgesehen.

Weiterhin umfasst jedes Rollelement 30 dem ersten Gehäuseteil 31 zugeordnete erste Linearführungseinrichtungen zur Abstützung und Führung an einer ersten Laufbahn 21 der Laufbahnpaarung sowie weitere, dem zweiten Gehäuseteil 32 zugeordnete zweite Linearführungseinrichtungen zur Abstützung und Führung an der gegenüberliegenden Laufbahn 22 der Laufbahnpaarung. Bei dem dargestellten Ausführungsbeispiel sind die Linearführungseinrichtungen jeweils durch eine Reihe von Kugeln 33 gebildet, die in , Längsrichtung der jeweiligen Laufbahn 21 bzw. 22 angeordnet sind. Es ist jedoch prinzipiell denkbar, eine Linearführung der Rollelemente auch auf andere Art und Weise zu realisieren, beispielsweise über nichtkugelige Wälzkörper, Gleitkörper oder Gleitvorsprünge.

An den Rollelementen 30 können gegebenenfalls ein oder mehrere, nicht näher dargestellte Federelemente zwischen den Gehäuseteilen 31 und 32 eingegliedert sein, die die Gehäuseteile 31 und 32 auseinanderspreizen, um die Kugeln 33 gegen die zugehörigen Laufbahnen 21 des Gelenkaußenteils 20 zu drücken und so ein etwaiges Spiel des Rollelements 30 zwischen den Laufbahnen 21 zu kompensieren. Hierdurch wird bei einer Wechselbelastung ein stoßartiges Anschlagen vermieden, wodurch die akustischen Eigenschaften des Gelenks 1 verbessert werden.

Die Gehäuseteile 31 und 32 sind nach außen in etwa quaderförmig ausgebildet und weisen jeweils an ihrer zu einer Laufbahn 21 weisenden Seite eine gerade Laufbahn 35 zur Aufnahme mehrerer Kugeln 33 auf. Die Kugeln 33 sind durch einen Käfig 36 gehalten, der das durch die Gehäuseteile 31 und 32 gebildete Gehäuse umgreift. An jeder Laufbahnseite bildet der Käfig 36 eine Fensterschiene 37 aus, die sich parallel zur jeweiligen Laufrille 35 des ersten bzw. zweiten Gehäuseteils 31 bzw. 32 erstreckt. In der Fensterschiene 37 sind mehrere Fenster 38 zur Aufnahme jeweils einer Kugel 33 ausgebildet. Die Fensterschienen 37 sind durch einen Bügel 39 miteinander verbunden, der sich über eine Stirnseite eines Zapfens 12 erstreckt. Dabei gestattet der Bügel 39 eine zumindest geringfügige Bewegbarkeit der Gehäuseteile 31 und 32 untereinander in Richtung der Laufbahnen 21. Anstelle eines einteiligen Käfigs 36 für alle Kugeln 33 kann auch für jede Laufrille 35 ein separater Käfig vorgesehen werden.

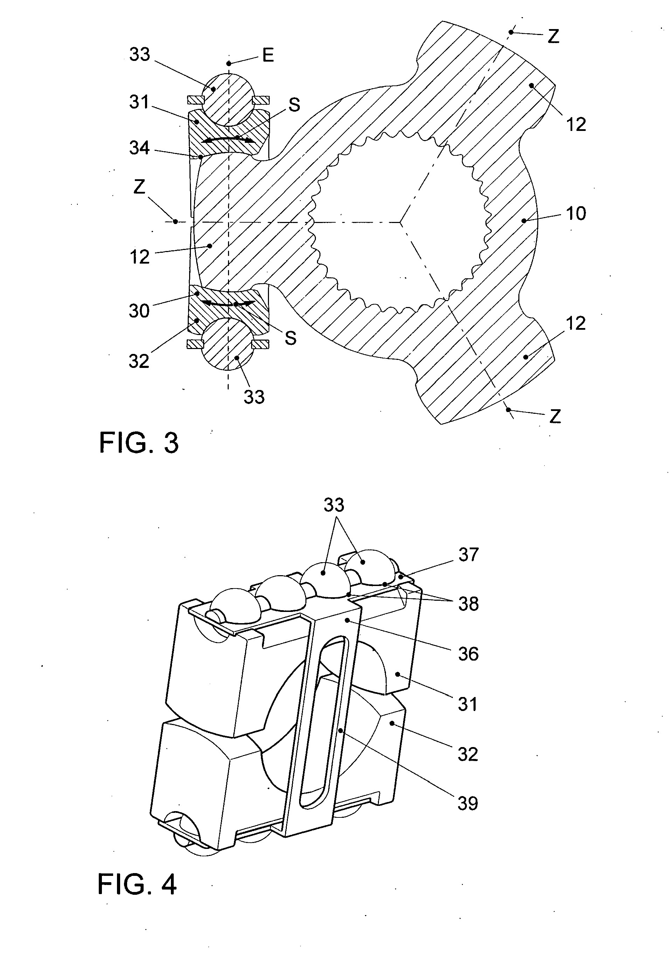

Erfindungsgemäß ist vorgesehen, dass das erste Gehäuseteil 31 und das zweite Gehäuseteil 32 gegenüber einer Ebene E, welche durch Mittellinien der ersten und zweiten Laufbahn 21 eines Laufbahnpaars aufgespannt wird, gegensinnig verschwenkbar sind. Diese Schwenkbarkeit ist in Figur 3 durch Pfeile S angedeutet. Wird das Tripodegelenk 1 gebeugt, können die Gehäuseteile 31 und 32 um eine Achse schwenken, die durch die Mittelpunkte der diese an der jeweiligen Laufbahn 21 abstützenden Kugeln 33 definiert wird. Bewegt sich in der in Figur 3 dargestellten Situation der Tripodestern 10 relativ zum Gelenkaußenteil bzw. Rollelement 30 nach rechts, schwenkt das erste, in Figur 3 oben dargestellte Gehäuseteil 31 um den Mittelpunkt der obenliegenden Kugel 33 gegen den Uhrzeigersinn, das zweite, in der Figur und den dargestellte Gehäuseteil 32 um den Mittelpunkt der unterliegenden Kugel 33 hingegen im Uhrzeigersinn.

Im Unterschied zu herkömmlichen Tripodegelenken, bei denen ein entsprechender Längenausgleich in Richtung der Längsachse Z der Zapfen durch eine Gleitbewegbarkeit ermöglicht wird, folgen bei der erfindungsgemäßen Lösung die Gehäuseteile 31 und 32 dem jeweiligen Zapfen 12 durch Verschwenken gegenüber der Ebene E. Im Idealfall ergibt sich hierbei eine reine Abrollbewegung zwischen dem Außenumfang des Zapfens 12 und der zugehörigen Aufnahmeöffnung 34. Gegebenenfalls kann eine solche Abrollbewegung jedoch auch mit gewissen Gleitanteilen einhergehen. Im Vergleich zu einem Ausgleich allein über eine Gleitbewegbarkeit wird hierdurch jedoch die Reibung reduziert und damit der Wirkungsgrad des Gelenks verbessert.

An dem Gelenk sind vorzugsweise federelastische Rückstellmittel vorgesehen, welche den beiden Gehäuseteilen 31 und 32 eine Neutralposition zueinander verleihen. Eine leichte Rückstellkraft, mit welcher die Gehäuseteile 31 und 32 in eine gemeinsame Ebene oder in eine in sonstiger Weise definierte Neutralposition zurückgestellt werden, kann beispielsweise in vorhandene Federelemente, welche zum Auseinanderspreizen der Gehäuseteile 31 und 32 dienen, integriert sein. Es ist jedoch auch möglich, separate Rückstellmittel und/oder Rückstellmittel an anderer Stelle vorzusehen, um das erste Gehäuseteil 31 und das zweite Gehäuseteil 32 aus einer gegenüber der Ebene E verschwenkten Lage z.B. in eine gemeinsame Ebene, insbesondere die Ebene E zurückdrängen. Möglich sind beispielsweise auch Federelemente zwischen den Gehäuseteilen 31 und 32 und dem Käfig 36, zwischen den Gehäuseteilen 31 und 32 und dem Gelenkaußenteil 20 und/oder zwischen den Gehäuseteilen 31 und 32 und dem Gelenkinnenteil 10, beispielsweise den Zapfen 12.

Wie Figur 3 weiter zeigt, kontaktieren die Zapfen 12 in den Aufnahmeöffnungen 34 mit ihrem Außenumfang jeweils das erste und das zweite Gehäuseteil 31 und 32. Der Eingriff ist dabei derart konfiguriert, dass bei einem Umlauf des Gelenks unter Beugung desselben zwischen diesen Gehäuseteilen 31 und 32 und dem Zapfen 12 in der Aufnahmeöffnung 34 eine Abrollbewegung auftritt.

Bei dem dargestellten Ausführungsbeispiel weisen die rotationssymmetrischen Zapfen 12 hierzu an ihrem Außenumfang eine nach außen gewölbte Mantellinie auf. Zudem.weisen die Aufnahmeöffnungen 34 eine nach innen gewölbte Mantellinie auf. Hierdurch ergibt sich eine geringe Hertzsche Pressung, die sich für die Lebensdauer günstig auswirkt. Vorzugsweise besitzen die Mantellinien der Zapfen 12 und der zugehörigen Aufnahmeöffnungen 34 jeweils die gleiche Krümmung. Insbesondere können die Mantellinien kreisförmig sein, wobei der Krümmungsmittelpunkt auf der Längsachse Z des jeweiligen Zapfens 12 liegt.

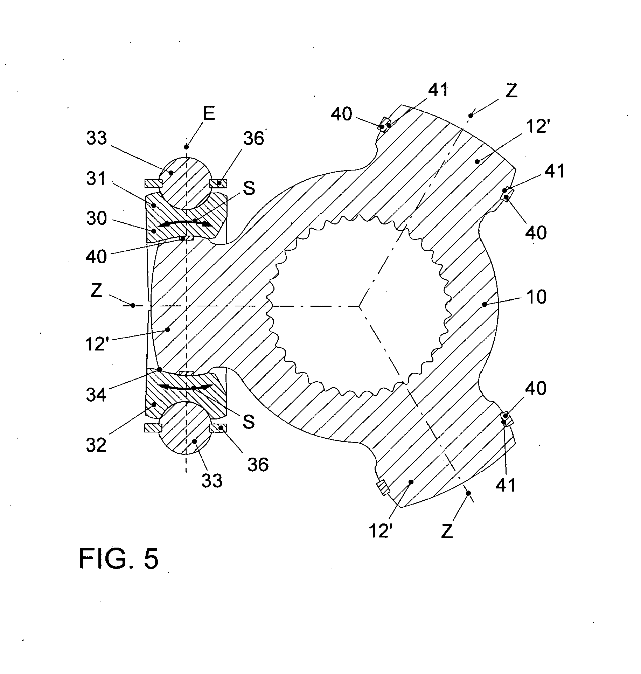

Figur 5 zeigt ein zweites Ausführungsbeispiel, das sich von dem ersten Ausführungsbeispiel lediglich durch die Anordnung von Federelementen 40 zwischen den Zapfen 12' und den zugehörigen Aufnahmeöffnungen 34 unterscheidet. Das Federelement 40 ist vorliegend als Ring ausgebildet, der in einer umlaufenden Nut 41 am Außenumfang eines Zapfens 12' gehalten ist. Das Federelement 40 ist zwischen dem Nutgrund und der Aufnahmeöffnung 34 vorgespannt eingebaut. Hierdurch lässt sich die Kraftübertragungscharakteristik des Gelenks einstellen. Bei einer geringen Vorspannung lässt sich das Gelenk leichter beugen als bei einer hohen Vorspannung. Anstelle eines ringförmigen Federelements 40 können auch mehrere, voneinander getrennt angeordnete Federelemente am Umfang verteilt vorgesehen sein. Ferner ist es möglich, den Zapfen 12' ohne Nut 41 auszubilden und/oder ein oder mehrere Federelemente auf der Seite der Aufnahmeöffnung 34, beispielsweise in dort ausgebildeten Nuten oder Taschen anzuordnen.

Die vorstehend erläuterten Tripodegelenke 1 ermöglichen bei Tripodegelenken vom Typ, bei denen die Rollelemente lediglich translatorisch entlang der Laufbahnen des Gelenkaußenteils verlagert werden, jedoch nicht um die Längsachse der Zapfen Z drehen können, eine Verbesserung des Wirkungsgrads.

Sie zeichnen sich ferner durch einen geringen Fertigungs- und Montageaufwand aus. Die Rollelemente können im Gelenkaußenteil zwischen den Laufbahnen verspannt werden, ohne die positiven Eigenschaften der Tripode negativ zu beeinträchtigen. Das Gelenk ist nahezu spielfrei. Geräuschbildung bei Wechsellast, sogenanntes "Wechsellastklacken", wird weitestgehend vermieden. Hierdurch wird die Fahrzeugakustik verbessert.

Durch Entfall eines Innenrings im Rollelement sowie aufgrund einer möglichen Reduzierung der Hertzschen Pressung kann bei gleicher Leistungsfähigkeit eine kompaktere Bauweise erzielt Werden.

Eine verminderte Reibung sowie die reduzierte Hertzsche Pressung wirken sich darüber hinaus lebensdauersteigernd aus.

Die Erfindung wurde vorstehend anhand von bevorzugten Ausführungsbeispielen näher erläutert. Sie ist jedoch nicht auf diese Ausführungsbeispiele beschränkt, sondern umfasst alle durch die Patentansprüche definierten Ausgestaltungen.

### Bezugszeichenliste

- 1: Tripodegelenk
- 10: Gelenkinnenteil bzw. Tripodestern
- 11: ringförmiger Grundkörper
- 12, 12': Zapfen
- 13: Eingangswelle
- 20: Gelenkaußenteil
- 21: erste Laufbahn
- 22: zweite Laufbahn
- 30: Rollelement
- 31: erstes Gehäuseteil
- 32: zweites Gehäuseteil
- 33: Kugel
- 34: Aufnahmeöffnung
- 35: Laufrille
- 36: Käfig
- 37: Fensterschiene
- 38: Fenster
- 39: Bügel
- 40: Federelement
- 41: Nut
- A: Drehachse des Gelenkinnenteils
- B: Drehachse des Gelenkaußenteils
- E: Ebene, aufgespannt durch Längsmittellinien gegenüberliegender Laufbahnen
- X: Verschieberichtung
- S: Schwenkrichtung
- Z: Längsachse des Zapfens

## Patentansprüche

1. Tripodegelenk, umfassend:
einen Tripodestern (10) mit radial abstehenden Zapfen (12),
ein Gelenkäußenteil (20) mit einer Drehachse (B), das parallel zu der Drehachse verlaufende Laufbahnpaare mit einander in Umfangsrichtung gegenüberliegenden Laufbahnen (21, 22) aufweist, und
jeweils ein Rollelement (30), das an den Laufbahnen eines Laufbahnpaares geführt ist,
wobei das Rollelement (30) umfasst:
ein Gehäuse mit einem ersten Gehäuseteil (31) und einem zweiten Gehäuseteil (32), welche gemeinsam eine Aufnahmeöffnung (34) zur Lagerung eines Zapfens (12) des Tripodesterns (10) ausbilden, sowie
Linearführungseinrichtungen, welche das erste Gehäuseteil (31) an einer ersten Laufbahn (21) eines Laufbahnpaares und das zweite Gehäuseteil (32) an einer zweiten Laufbahn (22) des Laufbahnpaares abstützen und in Längsrichtung führen,
**dadurch gekennzeichnet, dass** das erste Gehäuseteil (31) und das zweite Gehäuseteil (32) gegenüber einer Ebene (E), welche durch Mittellinien der ersten und zweiten Laufbahn (21, 22) eines Laufbahnpaars aufgespannt wird, gegensinnig verschwenkbar sind.

2. Tripodegelenk nach Anspruch 1, **dadurch gekennzeichnet, dass** die Linearführungseinrichtungen eine oder mehrere Kugeln (33) umfassen und das erste Gehäuseteil (31) um eine Achse, die durch die Mittelpunkte der dieses an der ersten Laufbahn (21) abstützenden Kugel bzw. Kugeln (33) definiert wird, verschwenkbar ist und das zweite Gehäuseteil (32) um eine Achse, die durch die Mittelpunkte der dieses an der zweiten Laufbahn (22) abstützenden Kugel bzw. Kugeln (33) definiert wird, verschwenkbar ist.

3. Tripodegelenk nach Anspruch 1 oder 2, **dadurch gekennzeichnet, dass** die Zapfen (12) in den Aufnahmeöffnungen'(34) mit ihrem Außenumfang jeweils gegen das erste und das zweite Gehäuseteil (31, 32) anliegen.

4. Tripodegelenk nach einem der Ansprüche 1 bis 3, **dadurch gekennzeichnet, dass** der Eingriff der Zapfen (12) mit dem ersten und zweiten Gehäuseteil (31, 32) derart konfiguriert ist, dass bei einem Umlauf des Gelenks unter Beugung desselben zwischen diesen Gehäuseteilen (31, 32) und dem Zapfen (12) in der Aufnahmeöffnung (34) eine Abrollbewegung auftritt.

5. Tripodegelenk nach einem der Ansprüche 1 bis 3, **dadurch gekennzeichnet, dass** die Zapfen (12) an ihrem Außenumfang eine nach außen gewölbte Mantellinie aufweisen und die Aufnahmeöffnungen (34) eine nach innen gewölbte Mantellinie aufweisen.

6. Tripodegelenk nach Anspruch 5, **dadurch gekennzeichnet, dass** die Mantellinien der Zapfen (12) und der zugehörigen Aufnahmeöffnungen (34) jeweils die gleiche Krümmung aufweisen.

7. Tripodegelenk nach einem der Ansprüche 1 bis 6, **dadurch gekennzeichnet, dass** zwischen mindestens einem Zapfen (12) und der zugehörigen Aufnahmeöffnung (34) ein oder mehrere Federelemente (40) angeordnet sind.

8. Tripodegelenk nach Anspruch 7, **dadurch gekennzeichnet, dass** mindestens ein Zapfen (12') an seinem Außenumfang eine umlaufende Nut (41) ausbildet und ein ringförmiges Federelement (40) in der umlaufenden Nut (41) angeordnet ist.

9. Tripodegelenk nach einem der Ansprüche 1 bis 8, **dadurch gekennzeichnet, dass** das Gehäuse quaderförmig ist und an zwei einander gegenüberliegenden Flächen jeweils eine gerade Laufbahn (35) ausbildet.

10. Tripodegelenk nach einem der Ansprüche 1 bis 9, **dadurch gekennzeichnet, dass** Rückstellmittel vorgesehen ist, welche das erste Gehäuseteil (31) und das zweite Gehäuseteil (32) in eine Neutralposition drängen.
